(19) Europäisches Patentamt
European Patent Office
Office européen des brevets

(11) **EP 3 204 969 B1**

(12) **EUROPEAN PATENT SPECIFICATION**

(45) Date of publication and mention of the grant of the patent:
**19.09.2018 Bulletin 2018/38**

(51) Int Cl.:
*H01M 2/34* *(2006.01)*          *H01M 4/505* *(2010.01)*
*H01M 10/0525* *(2010.01)*      *H01M 10/0567* *(2010.01)*
*H01M 10/0587* *(2010.01)*

(21) Application number: **15797386.8**

(22) Date of filing: **06.10.2015**

(86) International application number:
**PCT/IB2015/001783**

(87) International publication number:
**WO 2016/055846 (14.04.2016 Gazette 2016/15)**

(54) **NONAQUEOUS ELECTROLYTE SECONDARY BATTERY AND VEHICLE**

SEKUNDÄRBATTERIESYSTEM MIT WASSERFREIEM ELEKTROLYT SOWIE FAHRZEUG

BATTERIE RECHARGEABLE À ÉLECTROLYTE NON AQUEUX ET VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.10.2014 JP 2014209173**

(43) Date of publication of application:
**16.08.2017 Bulletin 2017/33**

(73) Proprietor: **TOYOTA JIDOSHA KABUSHIKI KAISHA**
**Toyota-shi, Aichi-ken 471-8571 (JP)**

(72) Inventors:
• **EBISUZAKI, Hideyo**
  **Toyota-shi, Aichi-ken 471-8571 (JP)**
• **KONDO, Yushi**
  **Toyota-shi, Aichi-ken 471-8571 (JP)**

(74) Representative: **Kuhnen & Wacker**
**Patent- und Rechtsanwaltsbüro PartG mbB**
**Prinz-Ludwig-Straße 40A**
**85354 Freising (DE)**

(56) References cited:
**EP-A1- 1 939 971          JP-A- 2013 239 374**
**US-A1- 2013 230 748**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

1. Field of the Invention

The present invention relates to a nonaqueous electrolyte secondary battery and a vehicle.

2. Description of Related Art

Japanese Patent Application Publication No. 2014-86384 (JP 2014-86384 A) describes that a current interrupt device (CID) can be accurately operated in an initial stage of overcharge by optimizing the size and amount of pores in a positive electrode mixture layer; as a result, even when a battery temperature is relatively high, the CID can be operated in an earlier stage than in the related art.

When a nonaqueous electrolyte secondary battery including a CID is overcharged, a gas producing agent contained in a nonaqueous electrolytic solution or the like reacts to produce gas (for example, hydrogen). As a result, the internal pressure of the nonaqueous electrolyte secondary battery increases. When the internal pressure of the nonaqueous electrolyte secondary battery exceeds a predetermined value, the CID operates to interrupt a charging current. Therefore, the nonaqueous electrolyte secondary battery can be prevented from being overcharged further. In this way, by securing the amount of gas produced during overcharge, the reliability of the nonaqueous electrolyte secondary battery during overcharge can be improved. Therefore, various methods for securing the amount of gas produced during overcharge have been studied. Moreover, JP 2013 239374 A discusses a lithium ion secondary battery capable of maintaining electric characteristics at a high level, and increasing the generation volume of gas, while preventing rise of battery temperature in overcharge and EP 1 939 971 A1 discusses a lithium secondary battery comprising a positive electrode and a negative electrode which each have a specific composition and specific properties as well as a nonaqueous electrolyte which, amongst others, contains a cyclic siloxane compound and a fluorosilane compound.

SUMMARY OF THE INVENTION

However, it was found that the amount of gas produced may be secured when a nonaqueous electrolyte secondary battery is overcharged in an initial stage of use; however, even in this case, the amount of gas produced may not be secured when the nonaqueous electrolyte secondary battery is overcharged in the last stage of use (after deterioration over time). An object of the invention is to prevent a nonaqueous electrolyte secondary battery from being overcharged further even when overcharged after deterioration over time.

According to an aspect of the invention, there is provided a nonaqueous electrolyte secondary battery including: an electrode body that includes a positive electrode and a negative electrode; a battery case that accommodates the electrode body and a nonaqueous electrolytic solution; an external connection terminal that is electrically connected to one electrode of the positive electrode and the negative electrode; and a current interrupt device that interrupts a conductive path, through which the electrode and the external connection terminal are electrically connected to each other, when an internal pressure of the battery case exceeds a predetermined value. The positive electrode includes a positive electrode current collector and a positive electrode mixture layer that is provided on a surface of the positive electrode current collector and contains a positive electrode mixture. When a ratio of an actual capacity to a nominal capacity is 95% or higher, an amount of fluorine contained per 1 mg of the positive electrode mixture is 0.15 $\mu$mol to 0.20 $\mu$mol.

Even when the nonaqueous electrolyte secondary battery having the above-described configuration is overcharged after deterioration over time, the amount of gas produced can be secured. As a result, the nonaqueous electrolyte secondary battery can be prevented from being overcharged further.

"Predetermined value" described above may be a working pressure of the current interrupt device. "Positive electrode mixture" may be a solid component of the positive electrode mixture layer. The positive electrode mixture contains a positive electrode active material and may further contain a binder and a conductive material.

The expression "when a ratio of an actual capacity to a nominal capacity is 95% or higher" may be that the nonaqueous electrolyte secondary battery is in an initial stage of use and, for example, may include a case where the nonaqueous electrolyte secondary battery is used within 1 year after shipping. "Nominal capacity" refers to a design battery capacity of the nonaqueous electrolyte secondary battery which is designated by a manufacturer. When the design battery capacity includes a maximum value and a minimum value, "nominal capacity" may be an average value between the maximum value and the minimum value. "Actual capacity" refers to an actual measured battery capacity of the nonaqueous electrolyte secondary battery and is measured by using a method which is well-known in the related art as a method of measuring the battery capacity of the nonaqueous electrolyte secondary battery. Hereinafter, when a ratio of an actual capacity to a nominal capacity is 95% or higher, the amount of fluorine contained per 1 mg of the positive electrode mixture will be referred to as "fluorine content per 1 mg of the positive electrode mixture".

The nonaqueous electrolytic solution may contain at least one of cyclohexylbenzene and biphenyl. As a result, when the nonaqueous electrolyte secondary battery is overcharged, gas is produced, and thus the nonaqueous electrolyte secondary battery can be prevented from being overcharged further.

The positive electrode mixture may contain a lithium composite oxide containing nickel, cobalt, and manganese. As a result, the thermal safety of the nonaqueous electrolyte secondary battery can be further improved.

In the nonaqueous electrolyte secondary battery, the nominal capacity may be a design battery capacity of the nonaqueous electrolyte secondary battery.

In the nonaqueous electrolyte secondary battery, the actual capacity may be an actual measured battery capacity of the nonaqueous electrolyte secondary battery.

In the nonaqueous electrolyte secondary battery, a concentration of an organic solvent containing fluorine in a mixed solvent contained in the nonaqueous electrolytic solution is 5 vol% to 10 vol%.

After the nonaqueous electrolyte secondary battery is initially charged, high-temperature aging may be performed on the nonaqueous electrolyte secondary battery under conditions of a temperature: 75°C to 85°C, a number of days for aging: 20 days to 30 days, and a battery voltage: 3.92 V to 4.03 V.

According to another aspect of the invention, there is provided a vehicle including the nonaqueous electrolyte secondary battery according to the invention. As a result, the safety of the vehicle can be improved even in the last stage of use of the vehicle.

The nonaqueous electrolyte secondary battery according to the aspect of the invention can be prevented from being overcharged further even when overcharged after deterioration over time.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a sectional view showing a part of an internal structure of a nonaqueous electrolyte secondary battery according to an embodiment of the invention;
FIG. 2 is a sectional view showing a part of an electrode body according to the embodiment of the invention;
FIG. 3 is a schematic diagram showing a use of the nonaqueous electrolyte secondary battery according to the embodiment of the invention;
FIG. 4 is a graph showing the results of Examples; and
FIG. 5 is a table showing the results of evaluating nonaqueous electrolyte secondary batteries according to the embodiment of the invention and nonaqueous electrolyte secondary batteries according to Comparative Examples.

DETAILED DESCRIPTION OF EMBODIMENTS

Hereinafter, the invention will be described with reference to the drawings. In the drawings of the invention, the same reference numeral represents the same component or a corresponding component. In addition, for the clarification and simplification of the drawings, a dimensional relationship such as length, width, thickness, or depth is appropriately modified and does not represent an actual dimensional relationship.

[Configuration of Nonaqueous Electrolyte Secondary Battery]

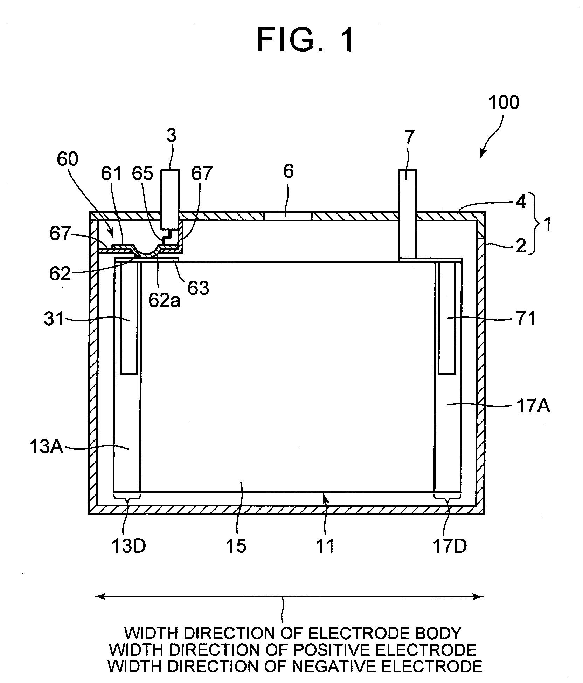

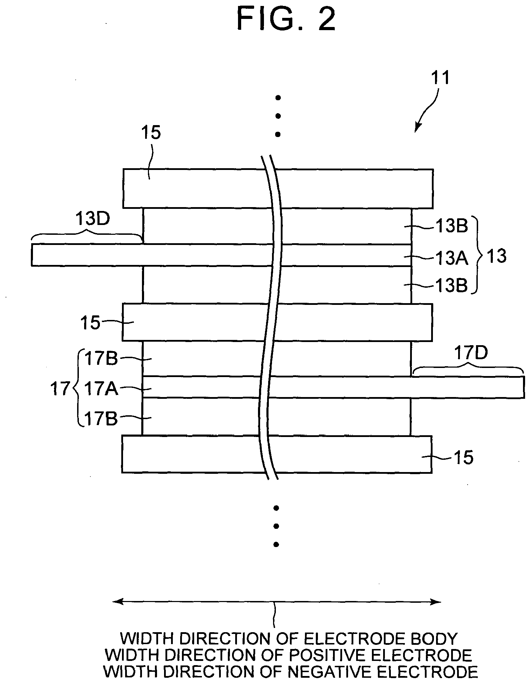

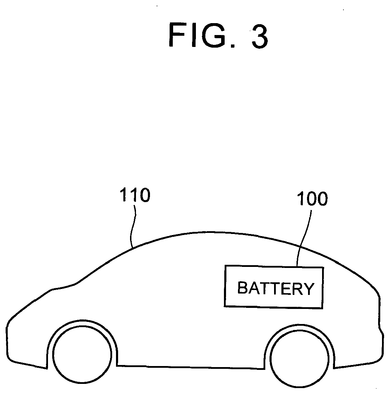

FIG. 1 is a sectional view showing a part of an internal structure of a nonaqueous electrolyte secondary battery according to an embodiment of the invention. FIG. 2 is a sectional view showing a part of an electrode body according to the embodiment of the invention. FIG. 3 is a schematic diagram showing a use of the nonaqueous electrolyte secondary battery according to the embodiment of the invention. A nonaqueous electrolyte secondary battery 100 includes a battery case 1, an electrode body 11, a nonaqueous electrolytic solution (not shown), and a current interrupt device (hereinafter, referred to as "CID") 60.

The battery case 1 includes: a case body 2 having a concave portion; and a lid 4 that covers an opening of the case body 2. The electrode body 11 and the nonaqueous electrolytic solution are provided in the concave portion of the case body 2. A positive electrode terminal 3 and a negative electrode terminal 7 penetrates the lid 4. The battery case 1 having the above-described configuration is preferably formed of metal such as aluminum.

In the electrode body 11, a positive electrode 13 and a negative electrode 17 are wound with a separator 15 interposed therebetween. The positive electrode 13 includes a positive electrode current collector 13A and a positive electrode mixture layer 13B that is provided on a surface of the positive electrode current collector 13A. The negative electrode 17 includes a negative electrode current collector 17A and a negative electrode mixture layer 17B that is provided on a surface of the negative electrode current collector 17A. The separator 15 is interposed between the positive electrode mixture layer 13B and the negative electrode mixture layer 17B.

At one end of the positive electrode 13 in a width direction, the positive electrode current collector 13A is exposed without the positive electrode mixture layer 13B being provided thereon (positive electrode exposure portion 13D). At one end of the negative electrode 17 in a width direction, the negative electrode current collector 17A is exposed without the negative electrode mixture layer 17B being provided thereon (negative electrode exposure portion 17D). In the electrode body 11, the positive electrode exposure portion 13D and the negative electrode exposure portion 17D protrude from the separator 15 in opposite directions to each other toward the outside of the positive electrode 13 in the width direction (or the outside of the negative electrode 17 in the width direction).

A positive electrode current collector plate 31 is welded to the positive electrode exposure portion 13D and is connected to the positive electrode terminal 3 through the CID 60. A negative electrode current collector plate 71 is welded to the negative electrode exposure portion 17D and is connected to the negative electrode terminal 7.

The nonaqueous electrolytic solution is held in the positive electrode mixture layer 13B, the separator 15, and the negative electrode mixture layer 17B and preferably contains one or more organic solvents, one or more lithium salts, and a gas producing agent.

When the nonaqueous electrolyte secondary battery 100 is overcharged, the gas producing agent reacts to produce hydrogen. Therefore, the internal pressure of the battery case 1 increases. When the internal pressure of the battery case 1 exceeds a working pressure of the CID 60, the CID 60 operates to interrupt a conductive path through which the positive electrode 13 and the positive electrode terminal 3 are electrically connected to each other. Accordingly, the nonaqueous electrolyte secondary battery 100 can be prevented from being overcharged further.

In the nonaqueous electrolyte secondary battery 100, when a ratio of an actual capacity to a nominal capacity is 95% or higher, an amount of fluorine contained per 1 mg of the positive electrode mixture is 0.15 $\mu$mol to 0.20 $\mu$mol. That is, the fluorine content per 1 mg of the positive electrode mixture is 0.15 $\mu$mol to 0.20 $\mu$mol.

When the fluorine content per 1 mg of the positive electrode mixture is 0.15 $\mu$mol or higher, the amount of hydrogen produced can be secured even in a case where the nonaqueous electrolyte secondary battery 100 is overcharged after deterioration over time. As a result, the nonaqueous electrolyte secondary battery 100 can be prevented from being overcharged further. The above-described findings are obtained by the present inventors based on thorough research (Examples described below). When the fluorine content per 1 mg of the positive electrode mixture is 0.2 $\mu$mol or lower, the performance of the nonaqueous electrolyte secondary battery 100 can be maintained at a high level. For example, the initial discharge resistance of the nonaqueous electrolyte secondary battery 100 can be suppressed to be low. Hereinafter, in the embodiment, even when the nonaqueous electrolyte secondary battery 100 is overcharged after deterioration over time, the nonaqueous electrolyte secondary battery 100 can be prevented from being overcharged further without deterioration in the performance of the nonaqueous electrolyte secondary battery 100.

The nonaqueous electrolyte secondary battery 100 is preferably used as a large-sized battery which is used in, for example, a power supply for a vehicle (for example, a power supply for a hybrid vehicle or an electric vehicle) or an industrial power supply, or a home power supply. For example, when the nonaqueous electrolyte secondary battery 100 is used in a power supply for a vehicle, the safety of a vehicle 110 can be improved even in the last stage of use of the vehicle 110. A position of the nonaqueous electrolyte secondary battery 100 in the vehicle 110 is not limited to a position shown in FIG. 3.

The present inventors obtained the following findings. When fluorine content per 1 mg of the positive electrode mixture exceeds 0.2 $\mu$mol, only the same effect as that in the case where the fluorine content per 1 mg of the positive electrode mixture is 0.15 $\mu$mol to 0.2 $\mu$mol is obtained. In addition, even when the nonaqueous electrolyte secondary battery 100 is overcharged after deterioration over time, it is difficult to prevent the nonaqueous electrolyte secondary battery 100 from being overcharged further.

"Fluorine content per 1 mg of the positive electrode mixture" refers to the fluorine content in a film which is formed on a surface of the positive electrode mixture due to a reaction between fluorine and the positive electrode mixture, for example, the fluorine content in a film (for example, a LiF film) which is formed on a surface of the positive electrode active material due to a reaction between fluorine and the positive electrode active material. Therefore, even when a binder (for example, PVdf (polyvinylidene difluoride)) containing fluorine is attached to the surface of the positive electrode mixture (excluding the binder), "fluorine content per 1 mg of the positive electrode mixture" does not include the amount of fluorine contained in the binder. In addition, even when a nonaqueous electrolytic solution, which contains a lithium salt (for example, $LiPF_6$) containing fluorine as a solute, is attached to the surface of the positive electrode mixture, "fluorine content per 1 mg of the positive electrode mixture" does not include the amount of fluorine contained in the solute.

The fluorine content per 1 mg of the positive electrode mixture can be obtained using the following method. First, the nonaqueous electrolyte secondary battery in which a ratio of an actual capacity to a nominal capacity is 95% or higher is disassembled to extract a predetermined amount of the positive electrode mixture (sample) from the positive electrode mixture layer 13B.

Next, the sample is washed with an aprotic solvent. Due to this washing, the nonaqueous electrolytic solution attached to the surface of the sample can be removed from the surface of the sample. The aprotic solvent is preferably one or more carbonates and more preferably the same organic solvent as that contained in the nonaqueous electrolytic solution.

Next, the sample is analyzed by ion chromatographic analysis using a commercially available ion chromatograph. In this way, the fluorine content per 1 mg of the positive electrode mixture can be obtained.

It is preferable that the amount of fluorine contained in the binder attached to the surface of the sample is subtracted from the result of the ion chromatographic analysis. For example, assuming that the binder is uniformly dispersed in the positive electrode mixture, the amount of the binder contained in the sample is calculated. The amount of fluorine contained in the binder is calculated based on the calculated amount of the binder. Hereinafter, the nonaqueous electrolyte secondary battery 100 will be described in more detail.

<Battery Case>

It is preferable that a safety valve 6 is provided on the lid 4. The safety valve 6 is opened at a higher pressure than the working pressure of the CID 60. When the safety valve 6 is opened, gas (for example, hydrogen described above) produced due to the reaction of the gas producing agent is discharged to the outside of the battery case 1.

<Positive Electrode>

It is preferable that the positive electrode current collector 13A has a configuration which is well-known in the related art as a configuration of a positive electrode current collector for a nonaqueous electrolyte secondary battery. For example, the positive electrode current collector 13A is aluminum foil having a thickness of 5 $\mu$m to 50 $\mu$m.

The positive electrode active material contained in the positive electrode mixture layer 13B is preferably formed of a material which is well-known in the related art as a positive electrode active material of a nonaqueous electrolyte secondary battery and more preferably formed of a lithium composite oxide containing nickel, cobalt, and manganese. This lithium composite oxide has high energy density per unit volume. Therefore, when the lithium composite oxide is used as the positive electrode active material, the energy density of the nonaqueous electrolyte secondary battery 100 per unit volume can be improved. In addition, the lithium composite oxide has superior thermal stability. Therefore, by using the lithium composite oxide as the positive electrode active material, even when the nonaqueous electrolyte secondary battery 100 is overcharged after deterioration over time, the nonaqueous electrolyte secondary battery 100 can be further prevented from being overcharged further.

"Lithium composite oxide containing nickel, cobalt, and manganese" refers to a compound represented by the following formula $LiNi_aCo_bMn_cO_2$ (wherein 0<a<1, 0<b<1, 0<c<1, and a+b+c=1) and, hereinafter, will be referred to as "NCM". In the formula $LiNi_aCo_bMn_cO_2$, it is preferable that a, b, and c satisfy 0.2<a<0.4, 0.2<b<0.4, and 0.2<c<0.4, and it is more preferable that a, b, and c satisfy 0.3<a<0.35, 0.3<b<0.35, and 0.3<c<0.35. NCM may be doped with a different element and examples of the different element include magnesium (Mg), silicon (Si), calcium (Ca), titanium (Ti), vanadium (V), chromium (Cr), zinc (Zn), gallium (Ga), zirconium (Zr), niobium (Nb), molybdenum (Mo), tin (Sn), hafnium (Hf), and tungsten (W). "Lithium composite oxide" refers to an oxide containing lithium and one or more transition metal elements.

It is preferable that the content of the positive electrode active material in the positive electrode mixture layer 13B is the content which is well-known in the related art as the content of a positive electrode active material in a positive electrode mixture layer for a nonaqueous electrolyte secondary battery. For example, the content of the positive electrode active material in the positive electrode mixture layer 13B is preferably 80 mass% to 95 mass%, more preferably 85 mass% to 95 mass%, and still more preferably 90 mass% to 95 mass%.

A conductive material contained in the positive electrode mixture layer 13B is preferably a material which is well-known in the related art as a conductive material contained in a positive electrode mixture layer for a nonaqueous electrolyte secondary battery. For example, the conductive material is preferably a carbon material such as acetylene black. It is preferable that the content of the conductive material in the positive electrode mixture layer 13B is the content which is well-known in the related art as the content of a conductive material in a positive electrode mixture layer for a nonaqueous electrolyte secondary battery. For example, the content of the conductive material in the positive electrode mixture layer 13B is preferably 1 mass% to 10 mass% and more preferably 3 mass% to 10 mass%.

A binder contained in the positive electrode mixture layer 13B is preferably a material which is well-known in the related art as a binder contained in a positive electrode mixture layer for a nonaqueous electrolyte secondary battery. For example, the binder is preferably PVdF. It is preferable that the content of the binder in the positive electrode mixture layer 13B is the content which is well-known in the related art as the content of a binder in a positive electrode mixture layer for a nonaqueous electrolyte secondary battery. For example, the content of the binder in the positive electrode mixture layer 13B is preferably 2 mass% to 5 mass%.

<Negative Electrode>

It is preferable that the negative electrode current collector 17A has a configuration which is well-known in the related art as a configuration of a negative electrode current collector for a nonaqueous electrolyte secondary battery. For example, the negative electrode current collector 17A is copper foil having a thickness of 5 $\mu$m to 50 $\mu$m.

It is preferable that the negative electrode mixture layer 17B contains a negative electrode active material and a binder. The negative electrode active material is preferably a material which is well-known in the related art as a negative electrode active material for a nonaqueous electrolyte secondary battery. For example, the negative electrode active material is preferably a material having natural graphite as a core. The binder is preferably a material which is well-known in the related art as a binder contained in a negative electrode mixture layer for a nonaqueous electrolyte secondary battery. For example, the binder is preferably styrene-butadiene rubber (SBR).

It is preferable that the content of the negative electrode active material in the negative electrode mixture layer 17B is the content which is well-known in the related art as the content of a negative electrode active material in a negative electrode mixture layer for a nonaqueous electrolyte secondary battery. For example, the content of the negative electrode active material is preferably 80 mass% to 99 mass%. It is preferable that the content of the binder in the negative electrode mixture layer 17B is the content which is well-known in the related art as the content of a binder in a negative electrode mixture layer for a nonaqueous electrolyte secondary battery. For example, the content of the binder is preferably 0.3 mass% to 20 mass%.

<Separator>

It is preferable that the separator 15 has a configuration which is well-known in the related art as the configuration of a separator for a nonaqueous electrolyte secondary battery. For example, the separator 15 may be a laminate of resin layers which are formed of a porous polyolefin resin (for example, polypropylene) and may further include a heat resistance layer.

<Nonaqueous Electrolytic Solution>

As the organic solvent contained in the nonaqueous electrolytic solution, a solvent which is well-known in the related art as a solvent of a nonaqueous electrolytic solution contained in a nonaqueous electrolyte secondary battery can be used. The same shall be applied to the lithium salt.

As the gas producing agent, for example, cyclohexylbenzene (CHB) or biphenyl (BP) can be used. The content of the gas producing agent in the nonaqueous electrolytic solution is preferably 1 mass% to 10 mass% and more preferably 2 mass% to 5 mass%.

<CID>

It is preferable that the CID 60 has the following configuration. The CID 60 includes a deformed metal plate 61, a connection metal plate 63, and an insulating case 67. The deformed metal plate 61 is connected to the positive electrode terminal 3 through a current collector lead 65. The deformed metal plate 61 has a curved portion 62 whose center in the longitudinal direction is curved downward (electrode body 11 side) and is joined to the connection metal plate 63 at a tip end 62a of the curved portion 62. The connection metal plate 63 is electrically connected to the positive electrode current collector plate 31. As a result, a conductive path, through which the positive electrode 13 and the positive electrode terminal 3 are electrically connected to each other, is formed through the positive electrode current collector plate 31 and the CID 60.

When the internal pressure of the battery case 1 increases, the curved portion 62 is pressed upward (lid 4 side). When the internal pressure of the battery case 1 exceeds the working pressure of the CID, the curved portion 62 is flipped upside down. As a result, a junction between the deformed metal plate 61 and the connection metal plate 63 at the tip end 62a of the curved portion 62 is released. Accordingly, the conductive path is interrupted.

The insulating case 67 separates the deformed metal plate 61 and the current collector lead 65 from the electrode body 11 and the nonaqueous electrolytic solution and is provided such that at least the tip end 62a of the curved portion 62 is exposed to secure the junction between the tip end 62a and the connection metal plate 63.

The configuration of the CID 60 is not limited to the above-described configuration. A conductive path, through which the negative electrode 17 and the negative electrode terminal 7 are electrically connected to each other, is formed through the negative electrode current collector plate 71 and the CID 60. The following configuration may be adopted: a conductive path, through which the positive electrode 13 and the positive electrode terminal 3 are electrically connected to each other, is formed through the positive electrode current collector plate 31 and the CID 60; and a conductive path, through which the negative electrode 17 and the negative electrode terminal 7 are electrically connected to each other, is formed through the negative electrode current collector plate 71 and the CID 60.

[Manufacturing of Nonaqueous Electrolyte Secondary Battery]

It is preferable that a method of manufacturing the nonaqueous electrolyte secondary battery 100 includes a step of assembling the nonaqueous electrolyte secondary battery 100; a step of initially charging the nonaqueous electrolyte secondary battery 100; and a step of performing high-temperature aging on the nonaqueous electrolyte secondary battery 100.

<Assembly of the Nonaqueous Electrolyte Secondary Battery>

In the step of assembling the nonaqueous electrolyte secondary battery 100, the electrode body 11 and the nonaqueous electrolytic solution are supplied to the battery case 1. For example, the step of assembling the nonaqueous electrolyte secondary battery 100 includes a step of preparing the electrode body 11; a step of supplying the electrode body 11 to the battery case 1; and a step of injecting the nonaqueous electrolytic solution into the battery case 1.

(Preparation of Electrode Body)

In the step of preparing the electrode body 11, the positive electrode 13 and the negative electrode 17 are wound with the separator 15 interposed therebetween. For example, first, the separator 15 is disposed between the positive electrode 13 and the negative electrode 17. At this time, the positive electrode 13, the negative electrode 17, and the separator 15 are arranged such that the positive electrode exposure portion 13D and the negative electrode exposure portion 17D protrude from the separator 15 in opposite directions to each other toward the outside in the width direction of the positive electrode 13 (or the width direction of the negative electrode 17).
Next, a winding axis is arranged to be parallel to the width direction of the positive electrode 13 (or the width direction of the negative electrode 17), and the positive electrode 13, the separator 15, and the negative electrode 17 are wound using this winding axis. In this way, the electrode body 11 is obtained. Pressures may be applied to the electrode body (cylindrical electrode body), which is obtained by winding, in opposite directions.

(Supply of Electrode Body to Battery Case)

In the step of supplying the electrode body 11 to the battery case 1, the electrode body 11 to which the lid 4 is connected is supplied to the concave portion of the case body 2 of the battery case 1, and then the opening of the case body 2 is covered with the lid 4. For example, the positive electrode terminal 3 and the positive electrode current collector plate 31, which are provided on the lid 4, are connected to each other through the CID 60, and then the positive electrode current collector plate 31 and the positive electrode exposure portion 13D are connected to each other. After the positive electrode exposure portion 13D and the positive electrode current collector plate 31 are connected to each other, the positive electrode current collector plate 31 and the positive electrode terminal 3 may be connected to each other through the CID 60.
In addition, the negative electrode terminal 7 and the negative electrode current collector plate 71, which are provided on the lid 4, are connected to each other, and then the negative electrode current collector plate 71 and the negative electrode exposure portion 17D are connected to each other. After the negative electrode exposure portion 17D and the negative electrode current collector plate 71 are connected to each other, the negative electrode current collector plate 71 and the negative electrode terminal 7 may be connected to each other.
Next, the electrode body 11 to which the lid 4 is connected is supplied to the concave portion of the case body 2. After the opening of the case body 2 is covered with the lid 4, the lid 4 is welded to the periphery of the opening of the case body 2, for example, by irradiation of laser light.

(Injection of Nonaqueous Electrolytic Solution into Battery Case)

In the step of injecting the nonaqueous electrolytic solution into the battery case 1, the nonaqueous electrolytic solution is injected into the concave portion of the case body 2 through a liquid injection hole which has been formed in the case body 2 or the lid 4 in advance, and then the liquid injection hole is sealed. Before the liquid injection hole is sealed, the internal pressure of the battery case 1 may be reduced. In this way, the nonaqueous electrolyte secondary battery 100 can be assembled.

<Initial Charging>

The assembled nonaqueous electrolyte secondary battery 100 is initially charged. Initial charging refers to charging which is initially performed on the assembled nonaqueous electrolyte secondary battery 100. It is preferable that conditions of the initial charging are conditions which are well-known in the related art as conditions of initial charging which is performed during the manufacturing of a nonaqueous electrolyte secondary battery. For example, it is preferable that charging is performed at a constant current until the battery voltage reaches 4.1 V.

<High-Temperature Aging>

After the assembled nonaqueous electrolyte secondary battery 100 is initially charged, high-temperature aging is performed on the nonaqueous electrolyte secondary battery 100. As a result, fluorine contained in the lithium salt of the nonaqueous electrolytic solution reacts with the positive electrode active material on the surface of the positive electrode active material. As a result, for example, a LiF film is formed on the surface of the positive electrode active material. In this way, the fluorine content per 1 mg of the positive electrode mixture can be adjusted to be 0.15 $\mu$mol to 0.20 $\mu$mol.
It is preferable that at least one of the following conditions is satisfied as conditions of the high-temperature aging.

Temperature: 75°C to 85°C
Number of days for aging: 20 days to 30 days
Battery voltage: 3.92 V to 4.03 V

It is more preferable that the nonaqueous electrolyte secondary battery 100 is stored at 85°C for 25 days.
The nonaqueous electrolyte secondary battery 100 may be manufactured using the following method. Specifically, first, the nonaqueous electrolyte secondary battery 100 is assembled using the above-described method, except that a nonaqueous electrolytic solution which contains an organic solvent (for example, fluoroethylene carbonate (FEC)) containing fluorine is used. It is preferable that an organic solvent containing 5 vol% to 10 vol% of FEC is used as the solvent of the nonaqueous electrolytic solution.
Next, the assembled nonaqueous electrolyte secondary battery 100 is initially charged using the above-described method. As a result, fluorine contained FEC reacts with the positive electrode active material on the surface of the positive electrode active material. As a result, for example, a LiF film is formed on the surface of the positive electrode active material. In this way, the fluorine content per 1 mg of the positive electrode mixture can be adjusted to be 0.15 $\mu$mol to 0.20 $\mu$mol.
Next, aging is performed. The aging described herein may be performed in the same manner as in the above-described high-temperature aging. Alternatively, the aging may be performed at a temperature lower than in the above-described high-temperature aging or may be performed at a battery voltage lower than in the above-described high-temperature aging. In this way, the nonaqueous electrolyte secondary battery 100 can be manufactured.
Hereinafter, the invention will be described in more detail using Examples. However, the invention is not limited to the following Examples.

[Example 1]

<Manufacturing of Lithium Ion Secondary Battery>

(Preparation of Positive Electrode)

NCM powder was prepared as a positive electrode active material. The positive electrode active material, acetylene black, and PVdF were mixed with each other at a mass ratio of 90:8:2, and the obtained mixture was diluted with N-methylpyrrolidone (NMP). In this way, a positive electrode mixture paste was obtained.
The positive electrode mixture paste was applied to opposite surfaces of Al foil (positive electrode current collector) such that an end of the Al foil in a width direction thereof was exposed, and then was dried. The obtained electrode plate was rolled to obtain a positive electrode. In the positive electrode, a positive electrode mixture layer was formed in a region of the opposite surfaces of the Al foil excluding the end of the Al foil in the width direction.

(Preparation of Negative Electrode)

Flaky graphite was prepared as a negative electrode active material. The negative electrode active material, a sodium salt of carboxymethyl cellulose (CMC; thickener), and styrene-butadiene rubber (SBR; binder) were mixed with each other at a mass ratio of 98:1:1, and the mixture was diluted with water. In this way, a negative electrode mixture paste was obtained.

The negative electrode mixture paste was applied to opposite surfaces of Cu foil (negative electrode current collector) such that an end of the Cu foil in a width direction thereof was exposed, and then was dried. The obtained electrode plate was rolled to obtain a negative electrode. In the negative electrode, a negative electrode mixture layer was formed in a region of the opposite surfaces of the Cu foil excluding the end of the Cu foil in the width direction.

(Insertion and Preparation of Electrode Body)

A separator formed of polyethylene (PE) was prepared. The positive electrode, the negative electrode, and the separator were arranged such that the portion (positive electrode exposure portion) of the positive electrode mixture layer where the Al foil was exposed and the portion (negative electrode exposure portion) of the negative electrode mixture layer where the Cu foil was exposed protruded from the separator in opposite directions to each other toward the outside in the width direction of the Al foil. Next, a winding axis was arranged to be parallel to the width direction of the Al foil, and the positive electrode, the separator, and the negative electrode were wound using this winding axis. Pressures were applied to an electrode body (cylindrical electrode body) obtained as described above in opposite directions to obtain a flat electrode body.

A battery case including a case body and a lid was prepared. A positive electrode terminal and a positive electrode current collector plate provided on the lid were connected to each other, and then the positive electrode current collector plate was welded to a positive electrode exposure portion. A negative electrode terminal and a negative electrode current collector plate provided on the lid were connected to each other, and then the negative electrode current collector plate was welded to a negative electrode exposure portion. In this way, the lid was connected to the flat electrode body. Next, the flat electrode body was put into a concave portion of the case body, and an opening of the case body was covered with the lid.

(Preparation and Injection of Nonaqueous Electrolytic Solution)

Ethylene carbonate (EC), ethyl methyl carbonate (EMC), and dimethyl carbonate (DMC) were mixed with each other at a volume ratio of 3:5:2. FEC was added to the obtained mixture to obtain a mixed solvent having a concentration of FEC of 5 vol%. $LiPF_6$ and CHB were added to the mixed solvent obtained as described above to obtain a nonaqueous electrolytic solution. In the obtained nonaqueous electrolytic solution, the concentration of $LiPF_6$ was 1.0 mol/L, and the content ratio of CHB was 2 mass%.

The obtained nonaqueous electrolytic solution was injected into the concave portion of the case body through a liquid injection hole formed in the lid. The internal pressure of the battery case was reduced, and the liquid injection hole was sealed. In this way, a lithium ion secondary battery (nominal capacity: 20 Ah) according to Example 1 was obtained.

(Initial Charging and Aging)

The assembled lithium ion secondary battery was charged at a current of 1 C until the battery voltage reached 4.1 V (initial charging). Next, the lithium ion secondary battery was held at 60°C for 10 hours (aging). In this way, a lithium ion secondary battery according to Example 1 was manufactured. The manufactured lithium ion secondary battery was evaluated as follows.

<Measurement of Fluorine Content per 1 mg of Positive Electrode Mixture>

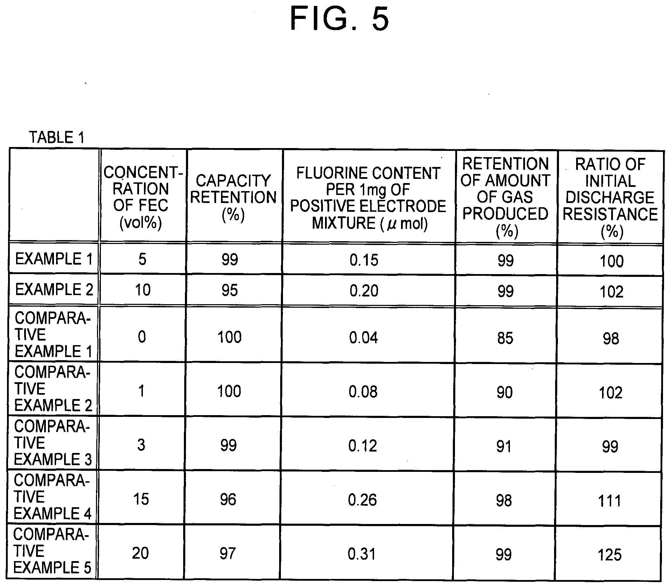

First, an actual capacity of the lithium ion secondary battery was measured, and a ratio of the actual capacity to the nominal capacity was calculated. The results are shown in Table 1 of FIG. 5.

In Table 1, "Concentration of FEC" refers to the concentration of FEC in the mixed solvent contained in the nonaqueous electrolytic solution. In addition, "Capacity Retention" refers to the ratio of the actual capacity to the nominal capacity.

Next, the lithium ion secondary battery was disassembled to extract a predetermined amount of a positive electrode mixture (sample) from a positive electrode mixture layer. Next, the sample was washed with a mixed solvent containing EC, EMC, and DMC (EC:EMC:DMC=3:5:2(volume ratio)).

Next, the washed sample was analyzed by ion chromatographic analysis using a commercially available ion chromatograph. In this way, the fluorine content per 1 mg of the positive electrode mixture was measured. The results are shown in Table 1.

<Measurement of Retention of Amount of Gas Produced>

Using some of the manufactured lithium ion secondary batteries, the initial amount of gas produced was measured. Next, using some of the remaining lithium ion secondary batteries, the amount of gas produced after deterioration over time was measured.

Specifically, the lithium ion secondary battery was charged (overcharged) to state-of-charge (SOC) of 140% under conditions of 60°C, 20 V, and 25 A. The amount of gas produced (initial amount of gas produced) was measured.

In addition, the SOC of the lithium ion secondary battery was adjusted to 100%, and then the lithium ion secondary battery was stored at 60°C for 100 days. This lithium ion secondary battery (lithium ion secondary battery after deterioration over time) was charged (overcharged) to SOC of 140% under conditions of 60°C, 20 V, and 25 A. The amount of gas produced (amount of gas produced after deterioration over time) was measured.

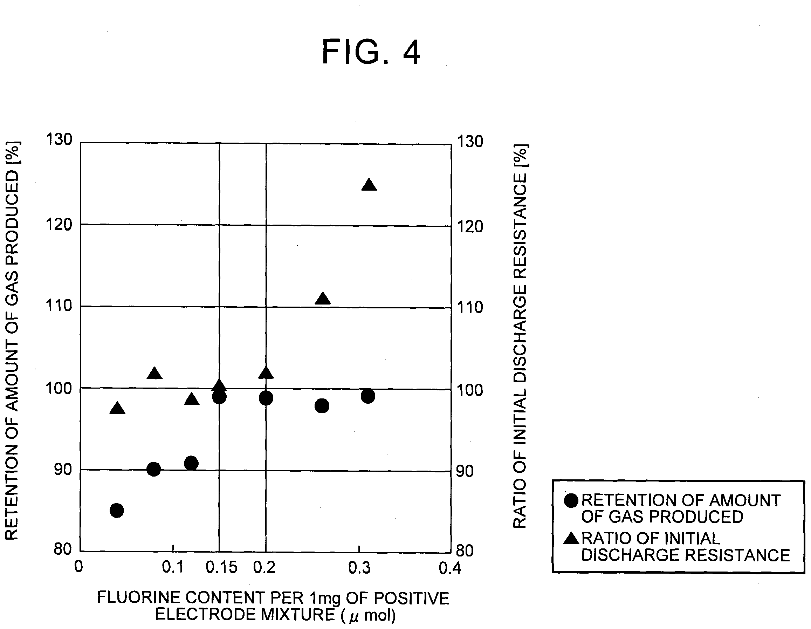

The retention of the amount of gas produced was calculated by substituting the initial amount of gas produced and the amount of gas produced after deterioration over time into the following Expression 1. The results are shown in Table 1 and FIG. 4. A high retention of the amount of gas produced implies that a nonaqueous electrolyte secondary battery can be prevented from being overcharged further even when overcharged after deterioration over time.

$$\text{(Retention of Amount of Gas Produced)}=\text{(Amount of Gas Produced after Deterioration Over Time)}/\text{(Initial Amount of Gas Produced)}\times100 \quad \dots \quad \text{Expression 1}$$

<Measurement of Initial Discharge Resistance>

First, the lithium ion secondary battery was discharged at a current of 10 C for 10 seconds (constant-charge discharge). The amount of voltage drop caused by this discharge was divided by the discharge current to obtain an initial discharge resistance. The results are shown in Table 1 and FIG. 4.

"Ratio of Initial Discharge Resistance" shown in Table 1 and FIG. 4 was obtained using the following Expression 2.

$$\text{(Ratio of Initial Discharge Resistance)}=\text{(Initial Discharge Resistance of Lithium Ion Secondary Battery According to Each of Examples and Comparative Examples)}/\text{(Initial Discharge Resistance of Lithium Ion Secondary Battery of Example 1)}\times100 \dots \text{Expression 2}$$

[Example 2 and Comparative Examples 1 to 5]

Lithium ion secondary batteries were manufactured using the method described in Example 1, except that a nonaqueous electrolytic solution having a concentration of FEC as shown in Table 1 was used. Using the methods described in Example 1, the fluorine content per 1 mg of the positive electrode mixture, the retention of the amount of gas produced, and the initial discharge resistance were measured. The results are shown in Table 1 and FIG. 4.

[Discussion]

As the concentration of FEC in the nonaqueous electrolytic solution increased, the fluorine content per 1 mg of the positive electrode mixture increased, and the retention of the amount of gas produced increased. In particular, in Examples 1 and 2, the retention of the amount of gas produced was 99%. It can be said from this result that the fluorine content per 1 mg of the positive electrode mixture is preferably 0.15 $\mu$mol or higher.

In Example 2 and Comparative Examples 4 and 5, the retentions of the amounts of gas produced were substantially the same. It can be said from this result that the fluorine content per 1 mg of the positive electrode mixture is preferably 0.20 $\mu$mol or lower.

As the concentration of FEC in the nonaqueous electrolytic solution increased, the initial discharge resistance increased. In particular, the concentrations of FEC in the nonaqueous electrolytic solution in Comparative Examples 4 and 5 were 1.1 times or higher that in Example 1. It can also be said from the results that the fluorine content per 1 mg of the positive electrode mixture is preferably 0.20 μmol or lower.

It can be seen from the above results that the fluorine content per 1 mg of the positive electrode mixture is preferably 0.15 μmol to 0.20 μmol. In addition, it can be seen that, when the concentration of FEC in the mixed solvent contained in the nonaqueous electrolytic solution is 5 vol% to 10 vol%, the fluorine content per 1 mg of the positive electrode mixture can be adjusted to be 0.15 μmol to 0.20 μmol.

The embodiment and Examples disclosed herein are merely exemplary in all respects and are not particularly limited. The scope of the invention is defined not by the above description but by claims, and equivalent meanings to claims and all the changes within claims are intended to be embraced therein.

**Claims**

1. A nonaqueous electrolyte secondary battery (100) comprising:

   an electrode body (10) that includes a positive electrode (13) and a negative electrode (17);
   a battery case (1) that accommodates the electrode body (10) and a nonaqueous electrolytic solution;
   an external connection terminal (3; 7) that is electrically connected to one electrode of the positive electrode (13) and the negative electrode (17); and
   a current interrupt device (60) that interrupts a conductive path, through which the electrode and the external connection terminal (3; 7) are electrically connected to each other, when an internal pressure of the battery case (1) exceeds a predetermined value, wherein
   the positive electrode (13) includes a positive electrode current collector (13A) and a positive electrode mixture layer (13B) that is provided on a surface of the positive electrode current collector (13A) and contains a positive electrode mixture, and
   when a ratio of an actual capacity to a nominal capacity is 95% or higher, an amount of fluorine contained per 1 mg of the positive electrode mixture is 0.15 μmol to 0.20 μmol,
   a concentration of an organic solvent containing fluorine in a mixed solvent contained in the nonaqueous electrolytic solution is 5 vol% to 10 vol%.

2. The nonaqueous electrolyte secondary battery (100) according to claim 1, wherein the nonaqueous electrolytic solution contains at least one of cyclohexylbenzene and biphenyl.

3. The nonaqueous electrolyte secondary battery (100) according to claim 1 or 2, wherein
   the positive electrode mixture contains a lithium composite oxide containing nickel, cobalt, and manganese.

4. The nonaqueous electrolyte secondary battery (100) according to any one of claims 1 to 3, wherein
   the nominal capacity is a design battery capacity of the nonaqueous electrolyte (100) secondary battery.

5. The nonaqueous electrolyte secondary battery (100) according to any one of claims 1 to 4, wherein
   the actual capacity is an actual measured battery capacity of the nonaqueous electrolyte secondary battery (100).

6. The nonaqueous electrolyte secondary battery (100) according to any one of claims 1 to 5, wherein
   after the nonaqueous electrolyte secondary battery (100) is initially charged, high-temperature aging is performed on the nonaqueous electrolyte secondary battery (100) under conditions of a temperature: 75°C to 85°C, a number of days for aging: 20 days to 30 days, and a battery voltage: 3.92 V to 4.03 V.

7. A vehicle comprising
   the nonaqueous electrolyte secondary battery (100) according to any one of claims 1 to 6.

**Patentansprüche**

1. Sekundärbatterie mit einem nichtwässrigen Elektrolyten (100), aufweisend:

   einen Elektrodenkörper (10), der eine Positivelektrode (13) und eine Negativelektrode (17) umfasst;
   ein Batteriegehäuse (1), das den Elektrodenkörper (10) und eine Lösung mit nichtwässrigem Elektrolyten aufnimmt;
   einen externen Verbindungsanschluss (3; 7), der mit einer Elektrode von der Positivelektrode (13) und der Negativelektrode (17) elektrisch verbunden ist; und

eine Stromunterbrechungsvorrichtung (60), die einen leitenden Pfad, durch den die Elektrode und der externe Verbindungsanschluss (3; 7) miteinander elektrisch verbunden sind, unterbricht, wenn ein Innendruck des Batteriegehäuses (1) einen vorgegebenen Wert überschreitet, wobei

die Positivelektrode (13) einen Positivelektrodenstromabnehmer (13A) und eine Positivelektrodenmischungsschicht (13B), die sich auf einer Oberfläche des Positivelektrodenstromabnehmers (13A) befindet und eine Positivelektrodenmischung enthält, beinhaltet, und

wenn ein Verhältnis einer tatsächlichen Kapazität zu einer nominalen Kapazität 95% oder mehr beträgt, eine Menge an Fluor, das pro 1 mg der Positivelektrodenmischung enthalten ist, zwischen 0,15 μmol und 0,20 μmol beträgt,

eine Konzentration eines organischen Lösungsmittels, das Fluor enthält, in einem gemischten Lösungsmittel, das in der Lösung mit nichtwässrigen Elektrolyten enthalten ist, zwischen 5 und 10 Volumenprozent beträgt.

2. Sekundärbatterie mit einem nichtwässrigen Elektrolyten (100) nach Anspruch 1, wobei die Lösung mit nichtwässrigem Elektrolyten zumindest eines von Cyclohexylbenzen und Biphenyl enthält.

3. Sekundärbatterie mit einem nichtwässrigen Elektrolyten (100) nach Anspruch 1 oder 2, wobei die Positivelektrodenmischung ein Lithiumverbundoxid beinhaltet, das Nickel, Kobalt und Mangan enthält.

4. Sekundärbatterie mit einem nichtwässrigen Elektrolyten (100) nach einem der Ansprüche 1 bis 3, wobei die nominale Kapazität eine Planungsbatteriekapazität der Sekundärbatterie mit nichtwässrigem Elektrolyten (100) ist.

5. Sekundärbatterie mit einem nichtwässrigen Elektrolyten (100) nach einem der Ansprüche 1 bis 4, wobei die tatsächliche Kapazität eine tatsächlich gemessene Batteriekapazität der Sekundärbatterie mit nichtwässrigem Elektrolyten (100) ist.

6. Sekundärbatterie mit einem nichtwässrigen Elektrolyten (100) nach einem der Ansprüche 1 bis 5, wobei, nachdem die Sekundärbatterie mit dem nichtwässrigen Elektrolyten (100) anfänglich geladen wurde, ein Hochtemperaturalterungsvorgang mit der Sekundärbatterie mit nichtwässrigem Elektrolyten (100) durchgeführt wird, wobei Temperaturbedingungen zwischen 75°C und 85°C herrschen, die Alterung zwischen 20 und 30 Tage lang durchgeführt wird und eine Batteriespannung zwischen 3,92 V und 4,03V beträgt.

7. Fahrzeug, aufweisend die Sekundärbatterie mit einem nichtwässrigen Elektrolyten (100) nach einem der Ansprüche 1 bis 6.

**Revendications**

1. Batterie rechargeable à électrolyte non aqueux (100) comprenant :

un corps d'électrode (10) qui comprend une électrode positive (13) et une électrode négative (17) ;
un boîtier de batterie (1) qui loge le corps d'électrode (10) et une solution électrolytique non aqueuse ;
une borne de connexion externe (3 ; 7) qui est connectée électriquement à une électrode parmi l'électrode positive (13) et l'électrode négative (17) ; et
un dispositif interrupteur de courant (60) qui interrompt un chemin conducteur, par l'intermédiaire duquel l'électrode et la borne de connexion externe (3 ; 7) sont connectées électriquement l'une à l'autre, quand la pression interne du boîtier de batterie (1) dépasse une valeur prédéterminée,
dans laquelle
l'électrode positive (13) comprend un collecteur de courant d'électrode positive (13A) et une couche de mélange d'électrode positive (13B) qui est disposée sur une surface du collecteur de courant d'électrode positive (13A) et qui contient un mélange d'électrode positive, et
quand le rapport de la capacité réelle à la capacité nominale est de 95 % ou plus, la quantité de fluor contenu par 1 mg du mélange d'électrode positive est de 0,15 μmol à 0,20 μmol,
la concentration de solvant organique fluoré dans un mélange solvant contenu dans la solution électrolytique non aqueuse est de 5 % en volume à 10 % en volume.

2. Batterie rechargeable à électrolyte non aqueux (100) selon la revendication 1, dans laquelle la solution électrolytique non aqueuse contient au moins l'un parmi le cyclohexylbenzène et le biphényle.

3. Batterie rechargeable à électrolyte non aqueux (100) selon la revendication 1 ou 2, dans laquelle le mélange d'électrode positive contient un oxyde composite de lithium contenant du nickel, du cobalt, et du manganèse.

4. Batterie rechargeable à électrolyte non aqueux (100) selon l'une quelconque des revendications 1 à 3, dans laquelle la capacité nominale est la capacité de batterie formelle de la batterie rechargeable à électrolyte non aqueux (100).

5. Batterie rechargeable à électrolyte non aqueux (100) selon l'une quelconque des revendications 1 à 4, dans laquelle la capacité réelle est la capacité de batterie mesurée réelle de la batterie rechargeable à électrolyte non aqueux (100).

6. Batterie rechargeable à électrolyte non aqueux (100) selon l'une quelconque des revendications 1 à 5, dans laquelle, après que la batterie rechargeable à électrolyte non aqueux (100) a été chargée initialement, un vieillissement à température élevée est effectué sur la batterie rechargeable à électrolyte non aqueux (100) dans des conditions de température de 75°C à 85°C, de nombre de jours de vieillissement de 20 jours à 30 jours, et de tension de batterie de 3,92 V à 4,03 V.

7. Véhicule comprenant une batterie rechargeable à électrolyte non aqueux (100) selon l'une quelconque des revendications 1 à 6.

# FIG. 1

WIDTH DIRECTION OF ELECTRODE BODY
WIDTH DIRECTION OF POSITIVE ELECTRODE
WIDTH DIRECTION OF NEGATIVE ELECTRODE

# FIG. 2

WIDTH DIRECTION OF ELECTRODE BODY
WIDTH DIRECTION OF POSITIVE ELECTRODE
WIDTH DIRECTION OF NEGATIVE ELECTRODE

# FIG. 3

EP 3 204 969 B1

# FIG. 4

FLUORINE CONTENT PER 1mg OF POSITIVE
ELECTRODE MIXTURE ($\mu$ mol)

# FIG. 5

TABLE 1

| | CONCENT-RATION OF FEC (vol%) | CAPACITY RETENTION (%) | FLUORINE CONTENT PER 1mg OF POSITIVE ELECTRODE MIXTURE ($\mu$mol) | RETENTION OF AMOUNT OF GAS PRODUCED (%) | RATIO OF INITIAL DISCHARGE RESISTANCE (%) |
|---|---|---|---|---|---|
| EXAMPLE 1 | 5 | 99 | 0.15 | 99 | 100 |
| EXAMPLE 2 | 10 | 95 | 0.20 | 99 | 102 |
| COMPARA-TIVE EXAMPLE 1 | 0 | 100 | 0.04 | 85 | 98 |
| COMPARA-TIVE EXAMPLE 2 | 1 | 100 | 0.08 | 90 | 102 |
| COMPARA-TIVE EXAMPLE 3 | 3 | 99 | 0.12 | 91 | 99 |
| COMPARA-TIVE EXAMPLE 4 | 15 | 96 | 0.26 | 98 | 111 |
| COMPARA-TIVE EXAMPLE 5 | 20 | 97 | 0.31 | 99 | 125 |

**EP 3 204 969 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014086384 A
- JP 2013239374 A
- EP 1939971 A1